# EUROPEAN PATENT SPECIFICATION

(11) **EP 0 765 917 B1**
(45) Date of publication and mention of the grant of the patent: **26.03.2003**
(21) Application number: 96306991.9
(22) Date of filing: 25.09.1996
(51) Int. Cl.: C08L 101/00, C08L 21/00, C08K 5/526

(54) **Stabilized compositions of high heat amorphous resins and functionalized elastomers**
Stabilisierte Zusammensetzungen aus amorphen Hochtemperaturharzen und funktionalisierten Elastomeren
Compositions stabilisées de résines amorphes à haute température et élastomères fonctionalisés

(30) Priority: 29.09.1995 US 536505
(43) Date of publication of application: 02.04.1997
(73) Proprietor: GENERAL ELECTRIC COMPANY, Schenectady, NY 12345 (US)
(72) Inventor: Nazareth, Darryl, Evansville, Indiana 47715 (US); Cooper, Stephen Michael, Newburgh, Indiana 47711 (US)
(74) Representative: Szary, Anne Catherine, Dr.

(56) References cited:
- EP-A- 0 601 546
- EP-A- 0 755 980
- CHEMICAL ABSTRACTS, vol. 115, no. 18, 4 November 1991 Columbus, Ohio, US; abstract no. 184587, MATSUMOTO ET AL.: "Thermoplastic compositions for heat- and impact-resistant moldings" XP002044012 & JP 03 009 949 A (KANEGAFUCHI CHEMICAL)
- CHEMICAL ABSTRACTS, vol. 119, no. 26, 27 December 1993 Columbus, Ohio, US; abstract no. 272696, SAKASHITA ET AL.: "Manufacture of polycarbonate compositions with good thermal stability" XP002044013 & JP 05 239 331 A (GE PLASTICS)

## Description

The present invention relates to stabilized impact modified compositions of high heat amorphous resins comprising a functionalized elastomer compound, a sterically hindered ortho-substituted aryl phosphite and optionally, a catalyst capable of crosslinking the functionalized compound and/or improving the ductility of the compositions. The compositions of this invention when molded into articles have dramatic increases in several properties without sacrificing other key properties such as, for example, thermal properties.

### Description of the Related Art

Amorphous resins having glass transition temperatures in excess of about 160°C are commercially attractive materials because of their unique combination of properties, including, for example, high temperature resistance, dimensional and hydrolytic stability and electrical properties. Examples of such amorphous resins include, for example, polyetherimide resins, polyether sulfone resins, and polysulfone resins. Generally however, one of the drawbacks of these resins is typically their resistance to photo-yellowing and their resistance to impact is somewhat poor, i.e., molded articles made from the high heat resistant amorphous resins are somewhat brittle. Therefore, it would be desirable to increase the resistance to photo-yellowing and the impact resistance of these amorphous resins without sacrificing their other excellent properties. By improving the resistance to photo-yellowing and the impact resistance as well as other physical properties such as chemical resistance and hydrolytic stability of the high heat amorphous resins, a greater number of applications would then become available for the resins.

As previously mentioned, the polyetherimide resins are an illustrative example of high heat resistant amorphous resins. Polyetherimide resins are sold by General Electric Company, Mount Vemon, Indiana, under the trademark ULTEM resins. It is also known to impact modify polyetherimide resins using an olefinic glycidyl-methacrylate copolymer as taught by Sumitomo Chemical KK Japanese Patent Application filed March 31, 1983 and published October 17, 1984, as J59182847-A.

However, the prior art did not disclose and apparently did not recognize the unexpected dramatic increases in resistance to photo-yellowing that could be achieved with a sterically hindered ortho-substituted aryl phosphite. Also, the prior art did not disclose and apparently did not recognize the unexpected dramatic increases in impact strength that could be achieved with a catalyst when the catalyst and the polyetherimide are melt-mixed pnor to the addition of the epoxy functionalized α-olefin elastomer. The compositions of this invention when injection molded into molded articles can have dramatic increases m yellow resistance and impact properties without sacrificing thermal properties.

Impact modified polyetherimides containing epoxy functionalized elastomers have been disclosed in commonly owned application Serial No. 08/270,607 (Nazareth et al.) filed July 5, 1994 and in commonly owned application Serial No. (attorney docket 8CN-5573) (Nazareth et al.) filed July 25, 1995. The inventors did not disclose in those applications or recognize the unexpected increases in impact strength and color that can be achieved with the addition of a sterically hindered ortho-substituted aryl phosphite compound.

It is an object of the present invention to provide compositions and methods to prepare impact modified compositions of high heat resistant amorphous resins which exhibit enhanced color stability and ductility, etc., while substantially retaining other key physical properties such as heat distortion temperature.

### Summary of the Invention

In accordance with the present invention, novel polymer blend compositions are prepared containing high heat resistant amorphous resins, epoxy or orthoester functionalized elastomer compounds, and a sterically hindered ortho-substituted aryl phosphite compound capable of improving the color stability and ductility of the compositions. In preferred embodiments, a catalyst is melt-mixed with the high heat amorphous resin prior to the addition of the functionalized elastomer compound. When the compositions are in the molded state, they exhibit dramatically improved impact resistance, improved color stability and/or improved hydrolytic stability over other high temperature resistant amorphous resin compositions. In addition to enhanced impact properties, the polymer blends of this invention exhibit good retention of the other excellent thermal properties of the base resin.

### Detailed Description of the Invention

The amorphous resins having high glass transition temperatures (hereinafter referred to as Tg) are resins selected from polyetherimide resins, polyether sulfone resins, poly(aryl ether) copolymer resins, and polysulfone resins, having a Tg in excess of about 160°C, preferably in excess of about 170°C, and most preferably in excess of about 180°C. Amorphous resins that have Tg's lower than these ranges do not have sufficient temperature resistance to pursue the highest heat and hence, the most demanding commercial applications. Broad classes of amorphous polymers which fall outside the scope of the present invention are the poly(phenylene ether) resins, the polycarbonate resins, and the polycarbonate copolymer resins, such as the polyestercarbonates.

As previously mentioned, the polyetherimide resins are useful as an amorphous resin having a high Tg in the present invention. The polyetherimide resins (referred to hereinafter as PEI) are known compounds whose preparation and properties are described in U. S. Patent Nos. 3,803,085, 3,847,867 and 3,905,942, which are incorporated herein by reference.

The PEI used for preparing the blends of this invention contain repeat units in excess of 1 and typically from 10 to 1000 or more of the Formula (I): 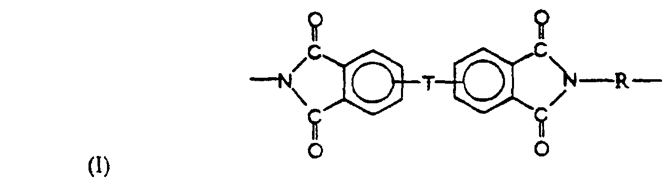 wherein T is -O- or a group of the formula -O-Z-O- wherein the divalent bonds of the -O- or the -O-Z-O- group are in the 3,3', 3, 4', 4,3', or the 4,4' positions; Z is a divalent aryl radical, including bis-aryl radicals, and can be substituted with methyl and halogen radicals. The two aryl radicals of the bis-aryl radical can be joined by a covalent bond or by one or more of the following divalent radicals of the Formulas (II): 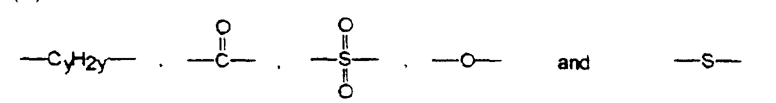 wherein y is an integer from about 1 to about 5. R m Formula (I) is a divalent organic radical selected from the group consisting of: (a) aromatic hydrocarbon radicals having from 6 to about 20 carbon atoms and halogenated derivatives thereof, (b) alkylene radicals having from 2 to about 20 carbon atoms, (c) cycloalkylene radicals having from 3 to about 20 carbon atoms, and (d) divalent radicals of the general Formula (III): 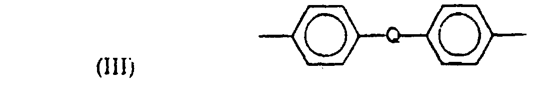 where Q is a member selected from the group consisting of Formulas (IV): 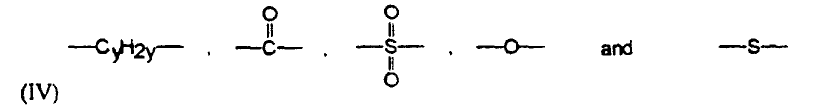 wherein y is an integer from about 1 to about 5. Generally, useful PEI have an intrinsic viscosity [η] greater than about 0.2 deciliters per gram, preferably of from about 0.35 to about 0.7 deciliters per gram measured m m-cresol at 25°C.

In one embodiment, the PE1 may be a copolymer which, in addition to the ethenmide units described above, further contains polyimide repeating units of the Formula (V): 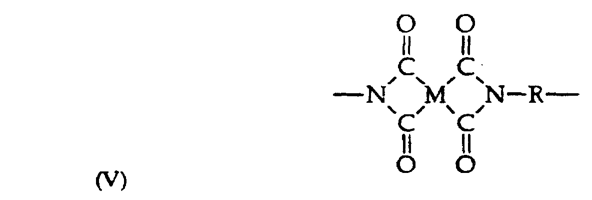 wherein R is as previously defined for Formula (I)and M is selected from the group consisting of Formula (VI): 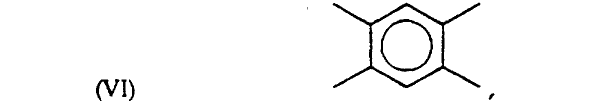 Formula (VII): 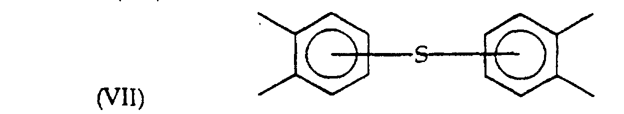 and Formula (VIII):

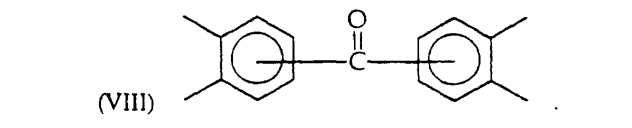

The PEI can be prepared by any of the methods well known to those skilled m the art, including the reaction of an aromatic bis(ether anhydride) of the Formula (IX): 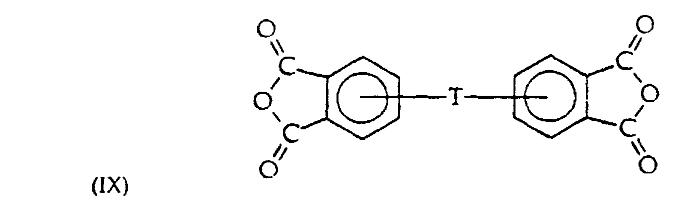 with an organic diamine of the Formula (X):

(X) H₂N-R-NH₂

wherein T and R are defined as described above for Formula (I). Preferred diamines include meta-phenylene diamine and para-phenylene diamine. Other useful diamines are known in the art. In general the reactions can be carried out employing well-known solvents, e.g., o-dichlorobenzene, m-cresol/toluene and the like to effect interaction between the anhydride of Formula (IX) and the diamine of Formula (X), at temperatures from about 100°C to about 250°C. Alternatively, the PEI can be prepared by melt polymerization of aromatic bis(ether anhydride)s and diamines accomplished by heating a mixture of the ingredients at elevated temperatures with concurrent stirring. It is preferred that the anhydride and the amine reactants be stoichiometrically balanced to result in an essentially balanced or neutral polymer. Balancing the reactants leads to improved stability of the resultant polymer. Generally melt polymerizations for PEI employ temperatures between about 200°C and 400°C. Chain stoppers and branching agents may also be employed in the reaction. The PEI and their preparation are described in U.S. Patent No. 3,983,093 (Williams et al), which is incorporated herein by reference.

Examples of specific aromatic bis(ether anhydrides) and organic diamines are disclosed, for example, in U.S. Patent Nos. 3,972,902 and 4,455,410, which are incorporated by reference herein.

A preferred class of aromatic bis(ether anhydride)s included by Formula (IX) above includes compounds wherein T is of the Formula (XI): 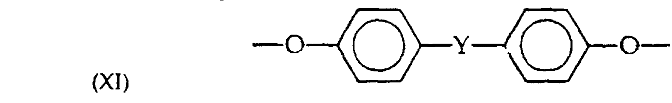 and the ether linkages are in the 3,3', 3, 4', 4,3', or the 4,4' positions, and mixtures thereof, and where Y is selected from the group consisting of Formulas (XII):

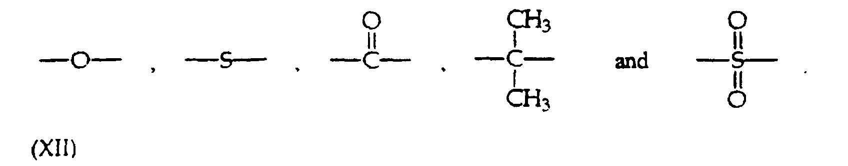

When PEI/polyimide copolymers are employed, a dianhydride, such as pyromellitic anhydride, is used in combination with the bis(ether anhydride).

Included among the many methods of making the PEI are those disclosed in U. S. Patent Nos. 3,847,867, 3,814,869, 3,850,885, 3,852,242 and 3,855,178. These disclosures are incorporated herein in their entirety by reference for the purpose of teaching, by way of illustration, general and specific methods for preparing PEI for use in the blends of this invention.

Particularly useful polyetherimide resin comprises repeating units of at least one of the following formulas (XIII - XV): 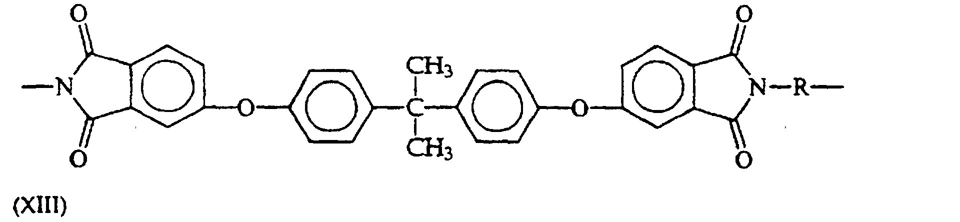 wherein R is a meta-phenylene radical or a para-phenylene radical; 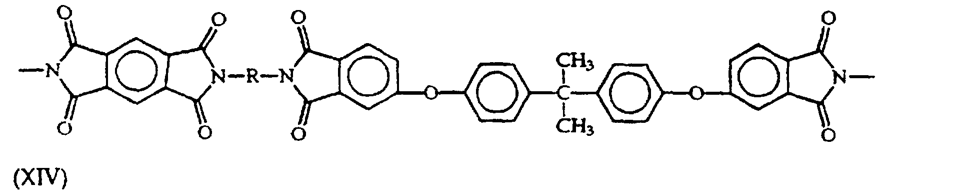 wherein R is a meta-phenylene radical; and 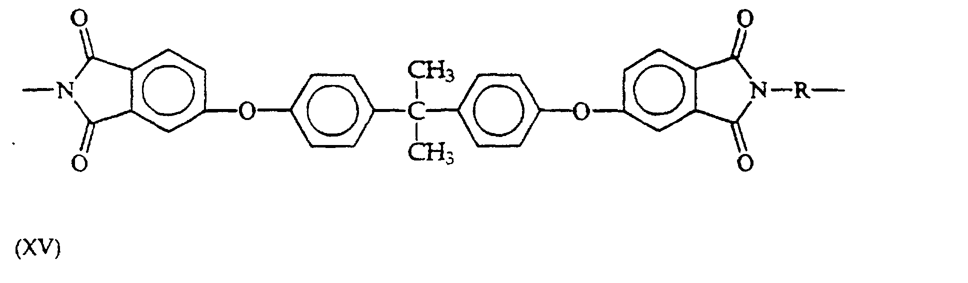 wherein R is about a 60:40 mole ratio of meta-phenyl radical and a bis-(gamma-propyl dimethylsiloxane) radical having a repeat unit average of about 10 siloxane units as both block and alternating copolymers.

Additional embodiments of the invention include thermoplastic molding compositions containing poly(aryl ether) copolymer resins as the amorphous resin. The poly(aryl ether) copolymer resins which may be used are thermoplastic polyarylene-polyether-polysulfones wherein the arylene units are interspersed with ether and sulfone linkages. These resins may be obtained by reaction of an alkali metal double salt of a dihydric phenol and a dihalobenzenoid compound, either or both of which contain a sulfone or ketone linkage, i.e., -SO₂- or -CO- between arylene groupings, to provide sulfone or ketone units in the polymer chain in addition to arylene units and ether units. The polysulfone polymer has a basic structure comprising recurring units of the formula (XVI):

(XVI) -O-E-O-E'-

wherein E is a residuum of the dihydric phenol and E' is a residuum of the benzenoid compound having an inert electron withdrawing group in at least one of the positions ortho and para to the valence bonds: both of said residua are valiantly bonded to the ether oxygens through aromatic carbon atoms. Such polysulfones are included within the class of polyarylene polyether resins described, for example, in U.S. Patent Nos. 3,264,536 and 4,108,837, which are included herein by reference.

The residuum of a dihydric phenol, E, is derived from dinuclear phenols of the formula (XVII): 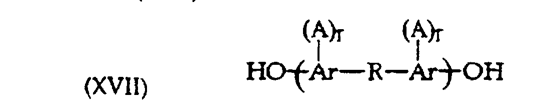 wherein Ar is an aromatic group and preferable is a phenylene group, each A may independently be the same or different inert substituent groups, such as alkyl groups having from 1 to 4 carbon atoms, halogen atoms (i.e., fluorine, chlorine, bromine or iodine) or alkoxy radicals having from 1 to 4 carbon atoms, each r is independently an integer having a value of from 0 to 4, inclusive and R is representative of a bond between aromatic carbon atoms as in dihydroxy diphenyl, or is a divalent radical, including, for example, C(O), O, S, S-S, SO₂ or a divalent organic hydrocarbon radical, such as alkylene, alkylidene, cycloalkylene, cycloalkylidene, or the halogen alkyl, aryl substituted alkylene, alkylidene, cycloalkylene, and cycloalkylidene radicals as well as alkarylene and aromatic radical and a ring fused to both Ar groups

Typical preferred poly(aryl ether) copolymer resins comprise recurring units having the following formula (XVIII): 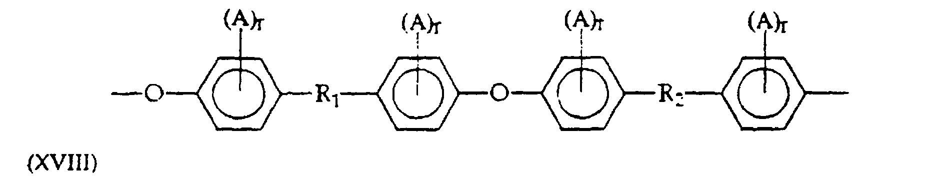 wherein A and r are as previously defined and R₁ and R₂ are representative of a bond between aromatic carbon atoms. Even more preferred are the polysulfones of the above formula comprising repeat units wherein each r is zero, R₁ is a divalent connection radical of the formula (XIX): 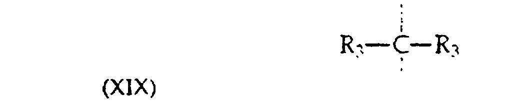 wherein R₃ is independently selected from lower alkyl, aryl, and the halogen substituted groups thereof, preferable methyl and R₂ is a sulfone group.

The poly(aryl ether) copolymer polymers generally have a weight average (Mw) molecular weight in excess of about 5000.

A particularly useful poly(aryl ether) is poly(phenyl) sulfone resin comprising repeating units of the formula (XX): 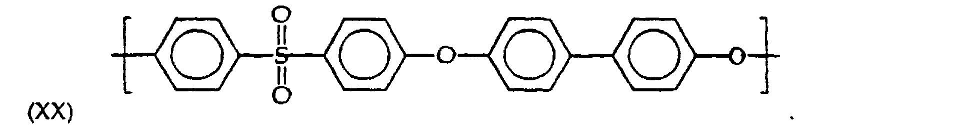 is commercially available from Amoco under the trademark RADEL as grade R5000A.

Another particularly useful poly(aryl ether) is poly(ether) sulfone resin having repeating units of formula (XXI): 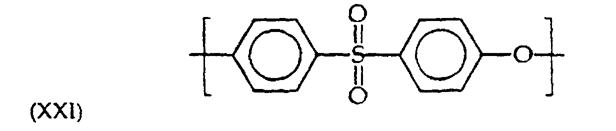 is commercially available from Amoco under the trademark RADEL as grade A300.

Another particularly useful poly(aryl ether) sulfone is polysulfone resin having repeating units of the formula (XXII): 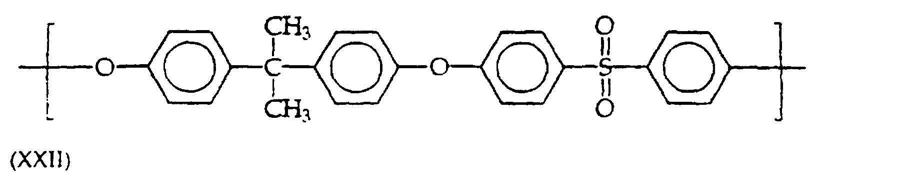 is commercially available from Amoco under the trademark UDEL as grade P-1700.

Another particularly useful poly(aryl ether) sulfone copolymer resin comprises repeating units of the formula (XXIII): 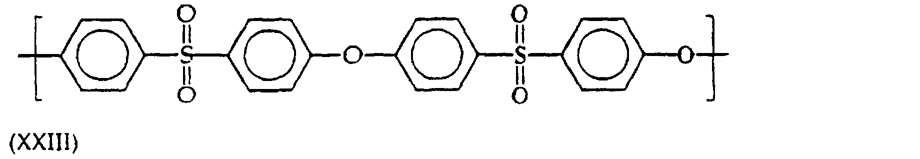 is commercially available from ICI Advanced Materials under the trademark VICTREX as grade 4100G.

The functionalized elastomeric compounds include polyolefinic compounds that contain on average at least two functional groups per elastomeric molecule, and preferably more than two functional groups per elastomeric molecule. It is possible for the functionalized elastomeric compounds to contain more than one type of functional species. It is also important that the functionalized elastomeric compound be compatible with the high heat amorphous resin.

According to one embodiment of the invention, the functionalized elastomeric compound is added in an amount effective to provide a thermoplastic resin composition with improved ductility and compatibility over the same composition without a functionalized elastomeric compound or wherein the functionalized elastomeric compound and catalyst have been melt-mixed at the same time. Improved ductility is indicated by increased notched Izod impact strength and/or a ductile failure mode in a falling dart impact test such as the Dynatup impact test. Improved compatibility is also meant to include the minimization of gross phase separation between the components of the blend. Indicators of improved compatibilization include, for example, reduced delamination tendency, increased ductility and/or unproved phase morphology stabilization.

The amount of the functionalized elastomeric compound is typically between about 1% to about 20% by weight based on the total weight of the amorphous resin, the functionalized elastomeric compound, and the catalyst. More preferably, the amount of the functionalized elastomenc compound typically is between about 3% to about 10% by weight, and most preferably the amount of the functionalized elastomeric compound typically is between about 4% to about 7% by weight, all based on the total weight of the amorphous resin, the functionalized elastomenc compound, and the catalyst.

One illustrative example of useful functionalized elastomers are the epoxy functionalized α-olefin elastomers. The epoxy functionalized α-olefin elastomers are preferably olefinic copolymers containing about 60% to about 99.5% by weight of an α-olefin and about 0.5% to about 40% by weight of a glycidyl ester of an α,β-unsaturated carboxylic acid. The amount of the epoxy functionalized α-olefin elastomer combined with the amorphous resin and catalyst is generally an amount sufficient to improve the overall toughness and ductility of the high heat amorphous resin.

The olefinic copolymers used in the present invention are copolymers of an α-olefin with a glycidyl ester of an α,β-unsaturated carboxylic acid. α-Olefin as used herein means ethylene, propylene, butene-1, etc. Among them, ethylene is preferred. The glycidyl esters of the α-β-unsaturated acids are compounds of the general formula (XXIV): 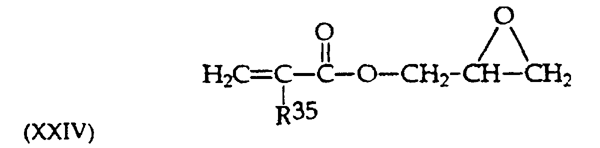 wherein R³⁵ represents a hydrogen atom or a lower alkyl group. Illustrative examples of the glycidyl esters of α,β-unsaturated acids include glycidyl acrylate, glycidyl methacrylate and glycidyl ethacrylate. The epoxy functionalized olefinic elastomer is preferably an olefinic copolymer containing of from about 60% to about 99.5% by weight of an α-olefin and of from about 0.5% to about 40% by weight of a glycidyl ester of an α,β-unsaturated carboxylic acid, preferably of from about 3% to about 30% by weight based on the weight of the elastomer's composition. When this amount is less than about 0.5% by weight, no intended effects can be obtained and when it exceeds about 40% by weight, gelation tends to occur during melt-blending resulting in degradation of the extrusion stability, moldability and mechanical properties of the product. It is also possible to blend the epoxy-functionalized polyolefin with various non-functionalized polyolefins such as, for example, linear low density polyethylene (commonly abbreviated "LLDPE"), polypropylene and ethylene-propylene copolymers provided that the overall epoxy content remains within the previously described range. Suitable epoxy functionalized α-olefin elastomers include: ethylene-glycidyl acrylate copolymers, ethylene-glycidyl methacrylate copolymers, ethylene-glycidyl methacrylate-vinyl acetate terpolymers, ethylene-glycidyl methacrylate-methyl acrylate terpolymers, ethylene-ethyl acrylate-glycidyl methacrylate terpolymers. The preferred epoxy functionalized elastomers are available from Sumitomo Chemical Co. under the trademarks IGETABOND and BONDFAST, and from Elf Atochem under the trademark LOTADER.

It should be mentioned, however, that good thermal stability is important for the functionalized elastomer compounds. In other words, the functionalized elastomer compound should be thermally stable at the processing temperatures of the particular high heat amorphous resin into which it is incorporated. For this reason, epoxy functionalized elastomers such as copolymers of ethylene and glycidyl methacrylate are preferred in resins such as polyetherimide because terpolymers which include materials such as vinyl acetate, ethyl acrylate or methyl acrylate, are more susceptible to thermal degradation at very high processing temperatures.

The compositions of the present invention may also contain at least one impact modifier that is not functionalized as previously described. Suitable impact modifiers for high heat amorphous resins are well known to those skilled in the art.

The polymer mixture according to the invention comprises as a third constituent a sterically hindered ortho-substituted aryl phosphite compound which when utilized in the manner of the present invention results an improvement in the color stability and in an increase in the ductility of compositions containing the high heat amorphous resin and a functionalized elastomer when compared to the same composition either not containing the sterically hindered ortho-substituted aryl phosphite compounds. The sterically hindered ortho-substituted aryl phosphite compounds have improved hydrolytic stability over aryl and/or alkyl phosphite compounds which are not ortho-substituted with a sterically hindered moiety. It is believed that the hydrolyzed species of phosphite compounds are phosphorous acid derivatives which adversely affect the remaining constituents of the composition. It is further believed that substitution with hydrophobic groups, such as tertiary butyl and phenyl leads to increased solubility of the phosphite with the high heat amorphous resin and the functionalized elastomer compounds. Increased solubility helps to disperse the phosphite throughout the composition in order to maximize the effect of the phosphite.

The sterically hindered ortho-substituted aryl phosphite compounds are well-known compounds m the art and have the following general formula (XXV): 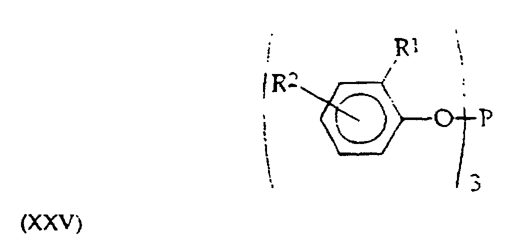 wherein each R¹ is a bulky or sterically hindered moiety independently selected from the group consisting of C₃₋₁₀ alkyl and C₆₋₁₀ aromatic moieties and each R² is independently selected from the group consisting of hydrogen, C₁₋₁₀ alkyl, and C₆₋₁₀ aromatic moieties. It is preferable for each bulky or sterically hindered R¹ to be a moiety such as, for example, tertiary butyl, 1,1,-dimethylpropyl, cyclohexyl, phenyl, or substituted phenyl moieties. It is also preferable for at least one of each R² to be a bulky or stericallv hindered moiety. The R² groups may be situated on any of the aryl carbons and there may be more than one R² group on an aryl ring. Preferred phosphites include tris(2-tert-butylphenyl)phosphite, tris(2,4-di-tert-butylphenyl)phosphite, tris(2,6-di-tert-butylphenyl)phosphite, tris(2-phenylphenyl)phosphite, tris(2-(1,1-dimethylpropyl)-phenyl)phosphite, tris(2,4-di-(1,1-dimethylpropyl)-phenyl)phosphite, tris(2-cyclohexylphenyl)phosphite, tris(2,4-di-tert-amylphenyl)phosphite, or tris(2-tert-butyl-4-phenylphenyl)phosphite.

The sterically hindered ortho-substituted aryl phosphite compounds are prepared via well-known methods in the art as illustrated in U.S. Patent Nos. 3,939,229, 4,187,212, and 4,810,579, all of which are incorporated herein by reference.

The sterically hindered ortho-substituted aryl phosphite compounds are generally added in an amount effective to improve the color stability of the composition while substantially maintaining or improving the other physical properties, such as ductility. An amount effective to improve the color stability of the composition is generally in the range of 0.01 to 5% by weight of the entire composition, preferably between about 0.05 and 3% by weight and most preferably between about 0.08 and 2% by weight. The sterically hindered ortho-substituted aryl phosphite compounds may also be used in combination with other stabilizers such as for example, hindered amines, epoxy compounds, thio compounds and/or hindered phenols.

The polymer mixture according to the invention comprises as an optional constituent a catalyst which when utilized in the manner of the present invention results in an increase in the ductility of compositions containing the high heat amorphous resin, a stencally hindered ortho-substituted aryl phosphite compound, and functionalized elastomer when compared to the same composition either not containing the catalyst or prepared in a manner outside the scope of the present invention. Illustrative examples of useful catalysts include: non-elastomeric metal salts, inorganic additives such as TiO₂, Silica, ZnO, ZnS, etc. as well as other catalysts known to crosslink the given functionalized elastomer compounds. It is also preferred that the catalyst be the type of material which has an affinity for the functionalized elastomer compound such that it will migrate within the high heat amorphous resin so as to make contact with the catalyst rather than remaining isolated within the high heat amorphous compound.

Suitable metal salts are inorganic or organic salts, more preferably metal salts of organic acids. Suitable organic acids are saturated and unsaturated aliphatic carboxylic acids, aromatic carboxylic acids, aliphatic and aromatic sulphonic or phosphonic acids and salts of alkyl hydrogen sulphates.

Specific organic acids include, but are not restricted to: benzoic, palmitic, launc, acetic, stearic, gluconic, as well as dodecyl benzene sulphonic acids.

Suitable metal salts may be taken from a broad range of metals. Among these, calcium, aluminum and zinc are preferred, but this does not preclude metals such as sodium, lithium, potassium, barium, beryllium, magnesium, copper, cobalt, and iron. In particular metal salts of stearic acid are preferred due to their desirable melting points, high purity, and wide commercial availability.

Also useful as catalysts for the present compositions containing the high heat amorphous resin and a functionalized elastomer compounds are acidic or basic inorganic compounds and preferably small particle mineral fillers, such as, for example, silica, metal oxides such as titanium dioxide, metal sulfides, fine clays, fine talcs, fine micas, and the like. Small particle is meant to include minerals having an average particle size less than about 45 microns, preferably less than about 25 microns and most preferably less than about 15 microns. Also included as catalysts are surface treated versions of the foregoing. Especially preferred catalysts are titanium dioxide and mixtures of titanium dioxide and a metal salt.

By adding a catalyst to the compositions containing the high heat amorphous resin, a sterically hindered ortho-substituted aryl phosphite compound, and a functionalized elastomer, it was discovered that the resulting compositions had a unique combination of beneficial properties including good color retention on thermal treatment, high temperature resistance, excellent flow, as well as improved chemical resistance and improved hydrolytic stability. One of the surprising discoveries was that by combining the above components in the appropriate amounts and order, it was possible to create a resin composition with improved ductility over the same composition without the catalyst. Thus, according to one embodiment of the invention, the catalyst, a sterically hindered ortho-substituted aryl phosphite compound, and functionalized elastomer are added to a high heat amorphous resin in an order and amount sufficient to provide a thermoplastic resin composition which exhibits improved properties, such as increased impact properties over the same composition where all the components are added together. Thus, the various components are added in an order and amount sufficient to provide an improved thermoplastic resin composition which exhibits an improvement in the notched Izod impact value of at least about 25%, preferably of at least about 45%, and a ribbed Dynatup impact strength improvement of at least about 50%, preferably greater than about 75% with a ductile impact failure mode over a control not containing the catalyst.

It was also surprisingly found that when a titanium dioxide is utilized, titanium dioxide offers superior color retention after thermal treatment as compared the same composition using a titanium oxide with a siloxane coating. Treatment of titanium dioxide with a siloxane is thought to reduce the potential reactive sites on the titanium dioxide and is expected to improve the color stability of compositions when exposed to elevated temperatures.

The compositions of the present invention advantageously comprise, represented as percentages by weight of the total composition, (A) the high heat amorphous resin preferably present at a level, expressed as percentages by weight of the total composition, of between about 50% and about 99% by weight, more preferably present at a level of about 85% to about 97% by weight, and most preferably present at a level of between about 90% and about 95% by weight; (B) the functionalized elastomer preferably present at a level, expressed as percentages by weight of the total composition, of about 1% to about 20% by weight, more preferably present at a level of about 3% to about 10% by weight, and most preferably present at a level of about 4% to about 7% by weight; and (C) the sterically hindered ortho-substituted aryl phosphite compounds preferably present at a level, expressed as percentages by weight of the total composition, of about 0.01% to about 5% by weight, more preferably present at a level of about 0.05% to about 3% by weight, and most preferably present at a level of about 0.08% to about 2% by weight. When the optional catalyst is employed at a level, expressed as percentages by weight of the total composition, of about 0.05% to about 6% by weight, more preferably present at a level of about 0.1% to about 4% by weight, and most preferably present at a level of about 0.5% to about 3% by weight.

The high heat amorphous resin and functionalized elastomer are preferably present in the composition at a respective weight ratio between about 6:1 and about 50:1, more preferably between about 8:1 and about 35:1, most preferably between about 6:1 and about 25:1.

Compositions of the present invention can also include effective amounts of at least one additive selected from the group consisting of anti-oxidants, flame retardants, drip retardants, dyes, pigments, colorants, reinforcing agents, antistatic agents, plasticizers and lubricants. These additives are known in the art, as are their effective levels and methods of incorporation. Effective amounts of the additives vary widely, but they are usually present in an amount less than about 5 or 10% with the exception of some flame retardants and reinforcing agents which can be used up to about 30% or more by weight, based on the weight of the entire composition.

The high heat amorphous compositions of the present invention may also be blended with other plastic resins which provide for an improved balance of properties. For example, it is contemplated that the high heat amorphous resins may be blended with other amorphous materials such as polycarbonate resins, poly(ester carbonate) resins, poly(phenylene ether) resins, poly(phenyl carbonate) resins, etc. The high heat amorphous composition of the present invention are preferably free of certain thermoplastic materials, and more specifically are preferably free of polyamides, polyesters, liquid crystalline polymers, and poly(arylene sulfide)s. The composition preferably consists essentially of the above ingredients, and more preferably consists of the above ingredients.

The preparation of the compositions of the present invention is normally achieved by intimately admixing the ingredients under conditions for the formation of an intimate blend. Such conditions often include mixing in single or twin screw type extruder or similar mixing device which can apply a shear to the components. The sterically hindered ortho-substituted phosphite can be added directly with the high heat amorphous resin and the functionalized elastomer or the phosphite can be premixed with one of the primary components, the high heat amorphous resin or functionalized elastomer. When a catalyst is utilized, it is desirable in the present compositions that the high heat amorphous resin, sterically hindered ortho-substituted phosphite, and the catalyst are added together prior to the addition of the functionalized elastomer. In other words, it is preferred that the high heat amorphous resin and the catalyst be premixed pnor to being mixed with the functionalized elastomer in order to achieve the desired morphology and properties of the present compositions.

While separate extruders may be used in the processing, these compositions may also be prepared by using a single extruder having multiple feed ports along its length to accommodate the addition of the various components. For example, the high heat amorphous resin, the sterically hindered ortho-substituted phosphite, and the optional catalyst can be added to the throat of the extruder and the functionalized elastomer added at a point downstream from a mixing section. Additional optional ingredients could be added either downstream or upstream. For example, it is often advantageous to add glass fiber into a port near the end of the extruder in order to minimize the fiber breakage from over compounding in the extruder. It is also sometimes advantageous to employ at least one vent port in each section between the feed ports to allow venting (either atmospheric or vacuum) of the melt. Those of ordinary skill m the art will be able to adjust blending times and temperatures, as well as component addition, without undue experimentation.

It should also be clear that improved molded articles prepared from the compositions of the present invention represent an additional embodiment of this invention.

The thermoplastic compositions may be molded into articles which exhibit desired levels of toughness, chemical resistance and hydrolytic stability. Specifically, the thermoplastic compositions are useful m making automotive parts for under the hood applications, needing both solvent resistance and high heat distortion temperatures, as well as food applications needing both high heat distortion temperatures and hydrolytic stability.

All patents and references cited herein are incorporated by reference.

The following examples are provided to illustrate some embodiments of the present invention. They are not intended to limit the invention in any aspect. All percentages are by weight based on the total weight of the entire composition, unless otherwise indicated.

### Examples

Blends were compounded on a twin screw extruder at 350 rpm. The extruder barrel set temperature was set to approximately 330°C. Dried, pelletized blended material was injection molded, also at 350°C into standard 3.18 mm (1/8 inch) test pieces for measurement of Izod impact strength according to ASTM D256, Dynatup (energy to fracture in the falling dart test) strength according to ASTM D3763 (using 6 cm (4 inch) diameter by 3.18 mm (0.125 inch) disks) and ductility was determined by visual inspection of the impacted specimens. The viscosities were measured under the described conditions using an Instron capillary rheometer at 337°C, 5 kg of weight.

PEI is a polyetherimide resin obtained from General Electric Company under the trademark ULTEM as grade 1000 and/or 1040

BF-E is (polyethylene-co-12% glycidyl methacrylate) obtained under the trademark BONDFAST E from the Sumitomo Chemical Co., Ltd.

DPP is diphenylphosphite obtained from General Electric Company under the trademark WESTON as grade DPP.

TNPP is trisnonyl phenylphosphite obtained from General Electric Company under the trademark WESTON as grade TNPP.

U-626 is bis(2,4-di-t-butylphenyl)pentaerythritol diphosphite obtained from General Electric Company under the trademark ULTRANOX as grade 626.

1-168 is tris(2,4-di-tert-butylphenyl)phosphite obtained from Ciba-Geigy Corporation under the trademark IRGAFOS as grade 168.

I-1010 is tetrakis(3,5,-di-tert-butyl-4-hydroxyhydrocinnamate)methane obtained from Ciba-Geigy Corporation under the trademark IRGANOX as grade 1010.

TiO₂ - coated is a titanium dioxide with a siloxane coating.

TiO₂ is titanium dioxide obtained from SCM as grade RC.

Table 1 to 3 contain illustrative samples of the present invention. Table 1 is illustrative of high heat amorphous compositions free of impact modifiers containing various phosphite compounds. Table 2 contains illustrative samples of a high heat amorphous resin, a functionalized elastomer compound and various phosphite compounds. Table 3 contains illustrative samples of a high heat amorphous resin, a functionalized elastomer compound and various phosphite compounds further containing titanium dioxide pigments and a hindered phenol.

**Table 1.**

| **FORMULATIONS:** | **1** | **2** | **3** | **4** | **5** |
|---|---|---|---|---|---|
| PEI | 100 | 99.8 | 99.8 | 99.8 | 99.8 |
| DPP | 0 | 0.1 | 0 | 0 | 0 |
| TNPP | 0 | 0 | 0.1 | 0 | 0 |
| U-626 | 0 | 0 | 0 | 0.1 | 0 |
| I-168 | 0 | 0 | 0 | 0 | 0.1 |

| **PROPERTIES:** | | | | | |
|---|---|---|---|---|---|
| Melt Flow Index, g/10 min @ 337°C | 1.57 | 1.21 | 1.35 | 1.32 | 1.61 |

Formulation 1 is a control containing PEI that has been compounded in order to provide a sample with the same heat history for MFI (melt flow index) comparison to the samples containing various phosphites. Sample 2 contains DPP (diphenylphosphite) and as noted by the MFI data, the viscosity of the sample increased as indicated by the lower MFI seen for sample 2 over the control sample 1. The lowering of the MFI is an indication of possible crosslinking reaction due to the DPP. Sample 3 contains TNPP (trisnonyl phenylphosphite) and this sample also showed indications of possible reactions of the PEI. Sample 4 contains bis(2,4-di-t-butylphenyl)pentaerythritol diphosphite as the phosphite and this sample also showed indications of possible reaction with the PEI. This result is especially surprising as bis(2,4-di-t-butylphenyl)pentaerythritol diphosphite has been described in the prior art as a useful phosphite in polycarbonates. Polycarbonates are especially sensitive to highly acidic species such that hydrolysis of a phosphite to a phosphorus acid species would lead to degradation of the polycarbonate. PEI are significantly more stable that polycarbonates such that it is expected that a phosphite useful for polycarbonates would also be useful for PEI. Sample 5 contains tris(2,4-di-tert-butylphenyl)phosphite, a sterically hindered ortho-substituted aryl phosphite compound. This sample appears stable as comparison of the MFI of sample 5 to the control sample 1 shows a very comparable MFI, 1.57 for sample 1 and 1.61 for sample 5. It is surprising based on the prior art that the sterically hindered ortho-substituted aryl phosphite compound would so improved over bis(2,4-di-t-butylphenyl)pentaerythritol diphosphite in avoiding undesired interactions with the PEI.

**Table 2**

| **FORMULATIONS:** | **6** | **7** | **8** | **9** | **10** |
|---|---|---|---|---|---|
| PEI | 95 | 95 | 95 | 95 | 95 |
| BF-E | 5 | 5 | 5 | 5 | 5 |
| DPP | 0 | 0.1 | 0 | 0 | 0 |
| TNPP | 0 | 0 | 0.1 | 0 | 0 |
| U-626 | 0 | 0 | 0 | 0.1 | 0 |
| I-168 | 0 | 0 | 0 | 0 | 0.1 |

| **PROPERTIES:** | | | | | |
|---|---|---|---|---|---|
| Notch Izod Impact, (ft-lb./in)J/m | 133.3 (2.5) | 21.3 (0.4) | 90.6 (1.7) | 90.6 (1.7) | 170.6 (3.2) |
| Melt Flow Index, g/10 min. | 0.94 | 1.65 | 1.36 | 1.38 | 0.95 |
| Dynatup Impact, (ft-lb) Nm | 57 (42) | 2.7 (2) | 11.8 (8.7) | 24.2 (18) | 57 (42) |
| Failure Mode* | ductile | brittle | brittle | brittle | ductile |
| Morphology | good | bad | swirl | swirl | good |
| delta E (3 days @ 150°C) | 4.6 | - | 3.0 | 4.5 | 2.3 |
| delta E (3 days @ 180°C) | 28 | - | 26 | 27 | 23.5 |

Formulation 6 is a control sample comprising PEI with the functionalized elastomer. Formulations 7, 8, and 9 are compositions comprising the PEI, functionalized elastomer and phosphites outside the scope of the present invention. As seen by these data, the ductility and morphology of the samples were diminished versus the controL Sample 10 is illustrative of the present invention containing PEI with a functionalized elastomer and a sterically hindered ortho-substituted aryl phosphite compound. Comparison of Sample 10 to Samples 7 through 9 illustrates the dramatic improvement with the sterically hindered ortho-substituted aryl phosphite compound versus other phosphite compounds. The color improvement is also significant between the control, Sample 6, and Sample 10.

**Table 3.**

| **FORMULATIONS:** | **11** | **12** | **13** | **14** | **15** | **16** | **17** | **18** | **19** |
|---|---|---|---|---|---|---|---|---|---|
| PEI | 95 | 93 | 93 | 92.8 | 92.8 | 92.8 | 92.8 | 92.8 | 92.8 |
| BF-E | 5 | 5 | 5 | 5 | 5 | 5 | 5 | 5 | 5 |
| I-168 | 0 | 0 | 0 | 0.2 | 0.2 | 0 | 0 | 0.1 | 0 |
| I-1010 | 0 | 0 | 0 | 0 | 0 | 0.2 | 0 | 0.1 | 0.1 |
| TNPP | 0 | 0 | 0 | 0 | 0 | 0 | 0.2 | 0 | 0.1 |
| TiO₂- coated | 0 | 2 | 0 | 2 | 0 | 0 | 0 | 0 | 0 |
| TiO₂ | 0 | 0 | 2 | 0 | 2 | 2 | 2 | 2 | 2 |

| **PROPERTIES:** | | | | | | | | | |
|---|---|---|---|---|---|---|---|---|---|
| delta E (3 days @ 150°C) | 4.6 | 10.6 | 2.9 | 8.3 | 1 | 1.4 | 2 | 0.9 | 1 |
| delta E (3 days @ 180°C) | 28 | 27.4 | 22.3 | 26.2 | 19.2 | 22 | 23 | 11.1 | 18 |

The data in Table 3 show delta E comparisons for samples exposed for 3 days to either 150 or 180°C versus the same samples not thermally treated. Sample 11 is a control containing a high heat amorphous resin, illustrated by a polyetherimide resin, and a functionalized elastomer compound. Samples 12 and 13 illustrate the effect of titanium dioxide pigment on the color shift of Sample 11. Surprisingly, the siloxane coated titanium oxide sample (Sample 12) had an increased color shift as compared to sample 11. The siloxane coating on the titanium dioxide was intended to pacify and reactive sites present on the titanium dioxide which in turn was expected to lead to a reduced color shift (e.g., lower delta E). Even more surprising, the sample containing the normal titanium dioxide without the siloxane treatment (Sample 13) had improved color stability over both Control Sample 11 and Sample 12. Samples 14 and 15 demonstrate the improvements in color stability achieved with the addition of a sterically hindered ortho-substituted aryl phosphite compound and correspond respectively to Samples 12 and 13. These data also demonstrate the improved color stability obtained with the normal titanium dioxide over the siloxane coated titanium dioxide. Samples 16 illustrate the properties obtained when a hindered phenol is added to a composition containing a high heat amorphous resin, a functionalized elastomer compound and a titanium dioxide which has not been treated with a siloxane (Sample 13). Sample 17 demonstrates the results obtained when a phosphite outside the scope of the present invention is added to the composition of Sample 13. With both Sample 16 and Sample 17 little improvement is noted on the thermal treatment test compared to Sample 13. Sample 18 demonstrates the improvement in color stability obtained with the addition of the hindered phenol to the compositions contained the sterically hindered ortho-substituted aryl phosphite compound and the normal titanium dioxide (Sample 15). Comparison of Sample 18 with Sample 19, containing a phosphite outside the scope of the present invention, illustrates the superior color retention obtained after thermal aging with the sterically hindered ortho-substituted aryl phosphite compound used in combination with a hindered phenol and titanium dioxide.

It should be clear that the preceding examples are meant to be illustrative of the present invention and are not intended to limit the present invention.

## Claims

1. A composition comprising:
(a) a high heat amorphous resin selected from polyetherimide resins, polyether sulfone resins, poly(aryl ether) copolymer resins and polysulfone resins having a glass transition temperature in excess of 160°C;
(b) an epoxy or orthoester functionalized elastomer compound; and
(c) a sterically hindered ortho-substituted aryl phosphite compound having the general formula 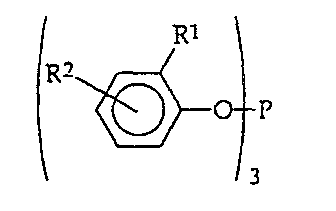
wherein R¹ is a bulky or sterically hindered moiety independently selected from the group consisting of C₃₋₁₀ alkyl and C₆₋₁₀ aromatic moieties and each R² is independently selected from the group consisting of hydrogen, C₁₋₁₀ alkyl, and C₆₋₁₀ aromatic moieties.

2. The composition of Claim 1 wherein component (a) is present in an amount of at least 50 percent by weight based on the total weight of the composition; component (b) is present in an amount from 1-20 percent by weight based on the total weight of the composition; and component (c) is present in an amount from 0.01 - 5 percent by weight based on the total weight of the composition.

3. The composition of claim 1 or claim 2 further comprising a catalyst.

4. The composition of claim 3 wherein the catalyst is a titanium dioxide.

5. The composition of claim 4 wherein the titanium dioxide has not been treated with a siloxane.

6. The composition of any preceding claim further comprising a hindered phenol.

7. The composition of any preceding claim wherein the functionalized elastomer compound is an epoxy functionalized α-olefin elastomer.

8. The composition of claim 7 wherein said epoxy functionalized α-olefin elastomer comprises 60% to 99.5% by weight of an α-olefin and 0.5% to 40% by weight of a glycidyl ester of an α, β-unsaturated carboxylic acid.

9. The composition of any preceding claim further comprising at least one unfunctionalized polyolefin resin or unfunctionalized elastomeric resin.

## Revendications

1. Composition comprenant :
(a) une résine amorphe à haute température choisie parmi les résines polyétherimides, les résines polyéther-sulfone, les résines copolymères poly(aryléther) et les résines polysulfones présentant une température de transition vitreuse dépassant 160 °C ;
(b) un composé élastomère à fonction(s) époxy ou orthoester ; et
(c) un composé phosphite d'aryle substitué en position ortho, à encombrement stérique, et répondant à la formule générale : 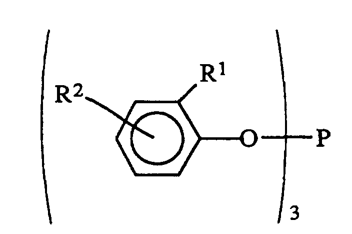
dans laquelle R¹ représente un fragment volumineux ou à encombrement stérique choisi indépendamment dans l'ensemble constitué par les groupes alkyle en C₃₋₁₀ et les fragments aromatiques en C₆₋₁₀, et chaque R² est indépendamment choisi dans l'ensemble constitué par un atome d'hydrogène, un groupe alkyle en C₁₋₁₀, et des fragments aromatiques en C₆₋₁₀.

2. Composition selon la revendication 1, dans laquelle le composant (a) est présent en une quantité d'au moins 50 % en poids par rapport au poids total de la composition ; le composant (b) est présent en une quantité allant de 1 à 20 % en poids par rapport au poids total de la composition ; et le composant (c) est présent en une quantité allant de 0,01 à 5 % en poids par rapport au poids total de la composition.

3. Composition selon la revendication 1 ou 2, comprenant un catalyseur.

4. Composition selon la revendication 3, dans laquelle le catalyseur est le dioxyde de titane.

5. Composition selon la revendication 4, dans laquelle le dioxyde de titane n'a pas été traité avec un siloxane.

6. Composition selon l'une quelconque des revendications précédentes, comprenant en outre un phénol encombré.

7. Composition selon l'une quelconque des revendications précédentes, dans laquelle le composé élastomère fonctionnalisé est un élastomère d'a-oléfine à fonction(s) époxy.

8. Composition selon la revendication 7, dans laquelle ledit élastomère d'α-oléfine à fonction(s) époxy comprend 60 % à 99,5 % en poids d'une α-oléfine, et 0,5 % à 40 % en poids d'un ester glycidylique d'un acide carboxylique α,β-insaturé.

9. Composition selon l'une quelconque des revendications précédentes, comprenant en outre au moins une résine polyoléfinique non-fonctionnalisée ou résine élastomère non-fonctionnalisée.

## Patentansprüche

1. Zusammensetzung, umfassend:
(a) ein amorphes Hochtemperaturharz, ausgewählt aus Polyetherimidharzen, Polyethersulfonharzen, Poly(arylether)copolymerharzen und Polysulfonharzen mit einer GlasübergangsTemperatur von mehr als 160°C,
(b) eine elastomere Verbindung mit funktionellen Epoxy- oder Orthoestergruppen und
(c) eine sterisch gehinderte, ortho-substituierte Arylphosphit-Verbindung der allgemeinen Formel 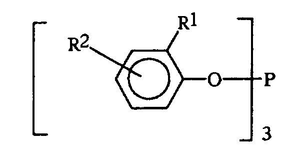
worin R¹ eine massige oder sterisch gehinderte Gruppierung ist, die unabhängig ausgewählt ist, aus der Gruppe bestehend aus C₃₋₁₀-Alkyl- und aromatischen C₆₋₁₀-Gruppierungen, und jeder R² unabhängig ausgewählt ist aus der Gruppe bestehend aus Wasserstoff, C₁₋₁₀-Alkyl- und aromatischen C₆₋₁₀-Gruppierungen.

2. Zusammensetzung nach Anspruch 1, worin Komponente (a) in einer Menge von mindestens 50 Gew.-%, bezogen auf das Gesamtgewicht der Zusammensetzung, vorhanden ist, Komponente (b) in einer Menge von 1 bis 20 Gew.-%, bezogen auf das Gesamtgewicht der Zusammensetzung, vorhanden ist, und Komponente (c) in einer Menge von 0,01 bis 5 Gew.-%, bezogen auf das Gesamtgewicht der Zusammensetzung, vorhanden ist.

3. Zusammensetzung nach Anspruch 1 oder 2, weiter umfassend einen Katalysator.

4. Zusammensetzung nach Anspruch 3, worin der Katalysator ein Titandioxid ist.

5. Zusammensetzung nach Anspruch 4, worin das Titandioxid nicht mit einem Siloxan behandelt worden ist.

6. Zusammensetzung nach einem vorhergehenden Anspruch, weiter umfassend ein gehindertes Phenol.

7. Zusammensetzung nach einem vorhergehenden Anspruch, worin die funktionelle Gruppen aufweisende Elastomer-Verbindung ein α-Olefinelastomer mit funktionellen Epoxygruppen ist.

8. Zusammensetzung nach Anspruch 7, worin das α-Olefinelastomer mit funktionellen Epoxygruppen 60 bis 99,5 Gew.-% eines α-Olefins und 0,5 bis 40 Gew.-% eines Glycidylesters einer α,β-ungesättigten Carbonsäure umfasst.

9. Zusammensetzung nach einem vorhergehenden Anspruch, weiter umfassend mindestens ein Polyolefinharz ohen funktionelle Gruppen oder elastomeres Harz ohne funktionelle Gruppen.
